# EUROPÄISCHE PATENTANMELDUNG

(11) **EP 3 543 501 A1**
(43) Veröffentlichungstag der Anmeldung: **25.09.2019**
(21) Anmeldenummer: 18162732.4
(22) Anmeldetag: 20.03.2018
(51) Int. Cl.: F02B 43/10, F02M 25/12, F02B 37/00, F02M 25/00, F02D 19/06

(54) **SCHIFFSANTRIEBSSYSTEM UND UMRÜSTUNGSVERFAHREN FÜR EIN SCHIFFSANTRIEBSSYSTEM**

(71) Anmelder: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(57) **Zusammenfassung**

Ein Schiffsantriebssystem umfasst mindestens einen Verbrennungsmotor (10a, 10b) mit einem Brennraum (11a, 11b) zum Verbrennen eines Treibstoffs und einem Turbolader (13a, 13b) mit einem Verdichter (14a, 14b) in einem Ansaugtrakt (12a, 12b) des Verbrennungsmotors (10a, 10b). Das Schiffsantriebssystem umfasst außerdem eine Elektrolyseeinrichtung (20), welche Wasserstoff- und Sauerstoffgas erzeugt, die an einer Druckseite des Verdichters (14a, 14b) zugegeben und zum Verbrennungsmotor (10a, 10b) geführt werden. Zudem sind ein Wassertank (31) und ein Alkoholtank (30) mit einer Druckseite des Verdichters (14a, 14b) verbunden, um Wasser und Alkohol der Ladeluft zuzugeben.

## Beschreibung

Die vorliegende Erfindung bezieht sich auf ein Umrüstungsverfahren für ein Schiffsantriebssystem nach dem Oberbegriff des Anspruchs 1. Die Erfindung betrifft außerdem ein Schiffsantriebssystem nach dem Oberbegriff des Anspruchs 2 und ein Verfahren zum Betreiben eines Schiffsantriebssystems nach dem Oberbegriff des Anspruchs 15.

Schiffsantriebssysteme umfassen üblicherweise eine Hauptmaschine sowie Hilfsmaschinen, die einen Treibstoff verbrennen, beispielsweise Schweröl, Diesel, Gasöl oder Gas. Mit steigenden Umweltstandards werden immer strengere Vorgaben für Emissionen festgelegt, die bei der Verbrennung des Treibstoffs entstehen. Neben dem Bestreben geringerer Abgasschadstoffe besteht ein weiteres allgemeines Ziel in der Effizienzsteigerung des Antriebssystems eines Schiffs, um einen möglichst wirtschaftlichen und treibstoffsparenden Betrieb zu ermöglichen.

Das Umrüstungsverfahren der Erfindung betrifft ein Schiffantriebssystem mit mindestens einem Verbrennungsmotor, welcher einen Brennraum zum Verbrennen eines Treibstoffs, einen Ansaugtrakt zum Zuleiten von Frischluft zum Brennraum, und einen Turbolader mit einem Verdichter im Ansaugtrakt umfasst. Der oder die Verbrennungsmotoren können eine Hauptmaschine, eine Hilfsmaschine oder einen Teil hiervon darstellen.

In entsprechender Weise umfasst ein gattungsgemäßes Schiffsantriebssystem, von dem die vorliegende Erfindung ausgeht, mindestens einen Verbrennungsmotor mit einem Brennraum zum Verbrennen eines Treibstoffs, einem Ansaugtrakt zum Zuleiten von Frischluft zum Brennraum, und einem Turbolader mit einem Verdichter im Ansaugtrakt. Schiffsantriebssysteme, wie sie von der Anmelderin entwickelt wurden, sind beispielsweise in EP 3124781 B1 beschrieben, und umfassen zusätzlich eine Elektrolyseeinrichtung zum Erzeugen von Wasserstoff- und Sauerstoffgas für den Verbrennungsmotor sowie einen Alkoholtank zum Zuführen von Alkoholen zum Verbrennungsmotor. Durch die Zugabe von Wasserstoff- und Sauerstoffgas sowie von alkoholischen Verbindungen kann der Brennprozess des Treibstoffs vorteilhaft beeinflusst werden, womit insbesondere weniger Ruß entsteht und eine Verbrennung vollständiger sein kann.

Analog umfasst ein gattungsgemäßes Verfahren zum Betreiben eines Schiffsantriebssystems die folgenden Schritte:
- Verbrennen eines Treibstoffs in einem Brennraum eines Verbrennungsmotors,
- Zuleiten von Frischluft über einen Ansaugtrakt zum Brennraum,
- Verdichten der Frischluft mittels eines Verdichters eines Turboladers im Ansaugtrakt,
- Erzeugen von Wasserstoff- und Sauerstoffgas für den Verbrennungsmotor mittels einer Elektrolyseeinrichtung, und
- Zuführen von Alkoholen aus einem Alkoholtank zum Verbrennungsmotor.

Als eine **Aufgabe** der Erfindung kann angesehen werden, ein Schiffsantriebssystem, ein Verfahren zum Betreiben und ein Verfahren zum Umrüsten eines Schiffsantriebssystems anzugeben, welche einen besonders effizienten und emissionsarmen Schiffsantrieb ermöglichen.

Diese Aufgabe wird durch das Schiffsantriebssystem mit den Merkmalen des Anspruchs 2 und die Verfahren mit den Merkmalen der Ansprüche 1 und 15 gelöst.

Vorteilhafte Varianten des erfindungsgemäßen Schiffsantriebssystems und der erfindungsgemäßen Verfahren sind Gegenstand der abhängigen Ansprüche und werden außerdem in der folgenden Beschreibung erläutert.

Bei dem eingangs genannten Umrüstungsverfahren für ein Schiffsantriebssystem wird erfindungsgemäß eine Elektrolyseeinrichtung zum Erzeugen von Wasserstoff- und Sauerstoffgas vorgesehen, welche mit einer Druckseite des Turboladers/Verdichters verbunden wird. Zudem werden ein Wassertank und ein Alkoholtank vorgesehen, welche ebenfalls mit der Druckseite des Turboladers/Verdichters verbunden werden.

Analog ist bei dem oben genannten gattungsgemäßen Schiffsantriebssystem erfindungsgemäß ein Wassertank vorgesehen, wobei der Wassertank und der Alkoholtank mit einer Druckseite des Turboladers/Verdichters verbunden sind, so dass an dieser Stelle Wasser und Alkohol zugeführt werden können. Zudem ist auch die Elektrolyseeinrichtung mit der Druckseite des Turboladers/Verdichters verbunden.

In entsprechender Weise ist bei dem oben genannten Verfahren zum Betreiben eines Schiffantriebssystems erfindungsgemäß vorgesehen, dass die Alkohole und Wasser aus einem Wassertank an einer Druckseite des Verdichters zugeführt werden. Zudem werden Wasserstoff- und Sauerstoffgas der Elektrolyseeinrichtung an der Druckseite des Verdichters zugeführt.

Indem Wasser (oder eine wässrige Lösung aus dem Wassertank) und Alkohol stromabwärts vom Turbolader in flüssiger Form in den Ansaugtrakt gegeben werden, wird die Ladeluft gekühlt. Hierdurch können größere Luftmengen in den Brennraum befördert werden. Zudem kann eine Entzündung früher im Takt erfolgen und länger anhalten, womit die Leistungsausgabe steigt. Der Brennprozess selbst wird günstig beeinflusst, wodurch weniger Ruß entsteht.

Durch die Zugabe von Wasserstoffgas, Sauerstoffgas und Alkohol hinter dem Turbolader wird im Vergleich zu einer Zugabe vor dem Turbolader die Sicherheit erhöht: Im Fall eines Flammenrückschlags aus dem Brennraum können sich diese Zusatzstoffe entzünden und die Flamme breitet sich aus. Werden die Zusatzstoffe erst auf der Druckseite des Turboladers hinzugegeben, ist es unwahrscheinlich, dass sich Flammen über den Verdichter des Turboladers hinaus ausbreiten. Ansonsten könnten sich Flammen über den Verdichter hinaus bis in einen umgebenden Maschinenraum ausbreiten, welcher zum Ansaugen von Frischluft nicht durch eine feste Wand abgeschirmt ist. Ein weiterer Sicherheitsvorteil resultiert daraus, dass beim Abstellen des Verbrennungsmotors praktisch kein entzündliches Gas im Ansaugtrakt verbleibt, weil weitestgehend alle im Druckbereich des Ansaugtrakts eingeführten Zusatzstoffe noch zum Brennraum geleitet werden, ehe sie kondensieren könnten. Als ein weiterer Vorteil erfährt das auf der Druckseite des Turboladers eingeleitete Wasserstoff- und Sauerstoffgas eine starke Verwirbelung, wodurch eine gute Durchmischung und eine gleichmäßige Verteilung zu allen auf den Turbolader folgenden Motoreinheiten oder Zylindern erreicht wird.

Der Wassertank und der Alkoholtank können über einen Mischungsbehälter mit der Druckseite des Turboladers verbunden sein. Es wird demnach ein Gemisch aus Wasser und Alkohol erzeugt, welches sodann mit einer Druckpumpe in den Ansaugtrakt eingesprüht wird, stromabwärts vom Turbolader. Indem zunächst ein Gemisch gebildet wird, ist nur eine einzige Druckpumpe erforderlich. Dies bedeutet erhebliche Kostenersparnisse, da die Druckpumpe und der Alkoholtank in der Regel explosionsgeschützt sein müssen und höheren Sicherheitsstandards genügen müssen. Die Druckpumpe kann dazu eingerichtet sein, einen Druck zu erzeugen, der höher ist als ein Druck des Turboladers. Dies ist zweckmäßig, um das Wasser-Alkohol-Gemisch in den Druckbereich hinter dem Turbolader einsprühen zu können. Prinzipiell können der Wassertank und der Alkoholtank auch durch einen gemeinsamen Tank gebildet sein, in dem ein Gemisch, insbesondere eine Emulsion, aus Wasser und Alkohol aufgenommen sind. Separate Tanks, die zu einem Mischungsbehälter führen, haben jedoch den Vorteil, dass ein Mischungsverhältnis zwischen Wasser und Alkohol variiert werden kann. Zudem wird durch einen Mischungsbehälter das Problem der Langzeitstabilität von Emulsionen vermieden.

Es kann eine (elektronische) Steuereinheit vorgesehen und dazu eingerichtet sein, ein Wasser-Alkohol-Mischungsverhältnis im Mischungsbehälter variabel einzustellen, das heißt, es ist variabel einstellbar, in welcher Menge Wasser aus dem Wassertank und in welcher Menge Alkohol aus dem Alkoholtank in den Mischungsbehälter gegeben werden.

Die Steuereinheit kann alternativ oder ergänzend auch dazu eingerichtet sein, ein Verhältnis zwischen Elektrolysegasen und Wasser und Alkohol, welche dem Verbrennungsmotor zugeführt werden, variabel einzustellen. Je nach Gestaltung der Elektrolyseeinrichtung werden hierbei Sauerstoffgas und Wasserstoffgas als Elektrolysegase gemeinsam (in festem Verhältnis zueinander) genutzt, oder aber Sauerstoffgas und Wasserstoffgas werden der Elektrolyseeinrichtung separat entnommen, so dass ein Verhältnis zwischen ihnen variiert werden kann.

Die Steuereinheit kann eine Datenschnittstelle zum Empfangen eines Treibstoffsignals umfassen, welches angibt, was für ein Treibstoff dem Verbrennungsmotor momentan zugeführt wird. Bei dem Treibstoff kann beispielsweise zwischen Schweröl, Gasöl, Gas oder Dieselöl unterschieden werden. Je nach Meeresregion, in der sich das Schiff fortbewegt, kann ein Wechsel des Treibstoffs vorgesehen sein. In welchem Verhältnis und in welcher Menge die Elektrolysegase, Wasser und Alkohol zugeführt werden sollen, hängt vom momentan verbrannten Treibstoff ab. Deshalb kann die Steuereinheit dazu eingerichtet sein, das Verhältnis zwischen Elektrolysegasen und Wasser und Alkohol abhängig vom Treibstoffsignal zu variieren.

Über die Datenschnittstelle können alternativ oder ergänzend auch weitere Parameter empfangen werden, in deren Abhängigkeit die Steuereinheit das Verhältnis zwischen Elektrolysegasen und Wasser und Alkohol verändert. Insbesondere kann ein Abgastemperatursensor vorhanden sein und die Steuereinheit variiert das Verhältnis zwischen Elektrolysegasen und Wasser und Alkohol abhängig von einer gemessenen Abgastemperatur. Eine höhere Abgastemperatur deutet darauf hin, dass die Ladeluft (das heißt, die vom Turbolader komprimierte Luft) stärker gekühlt werden kann. Daher kann die Steuereinheit insbesondere dazu eingerichtet sein, bei höherer Abgastemperatur mehr Alkohol und/oder Wasser zuzugeben. Durch weitere Temperatursensoren ist eine feinere Regelung möglich. Beispielsweise kann eine Temperatur im Maschinenraum, in dem sich der Verbrennungsmotor befindet, berücksichtigt werden.

Die Elektrolyseeinrichtung kann kosteneffizient so gestaltet sein, dass Wasserstoffgas und Sauerstoffgas gemeinsam entnommen und über dasselbe Rohr transportiert werden. Dies kann relevante Kostenvorteile aufgrund der hohen Sicherheitsanforderungen an die Rohrleitungen in explosionsgeschützten Bereichen auf Schiffen bedeuten, was später näher beschrieben wird. Alternativ kann die Elektrolyseeinrichtung so gestaltet sein, dass Wasserstoffgas und Sauerstoffgas über getrennte Leitungen befördert werden. Vorteilhafterweise kann in diesem Fall eine oder die Steuereinheit dazu eingerichtet sein, auch ein Verhältnis zwischen Wasserstoffgas und Sauerstoffgas, welche dem Verbrennungsmotor zugeführt werden, variabel einzustellen.

Es kann ein Ladeluftkühler vorgesehen sein, welcher die Ladeluft auf der Druckseite des Turboladers kühlt. Prinzipiell können bessere Ergebnisse erreicht werden, wenn anstelle der Kühlung durch den Ladeluftkühler eine Kühlung durch Zugabe des Alkohol-Wasser-Gemischs erfolgt. Deshalb kann eine oder die Steuereinheit dazu eingerichtet sein, eine Kühlleistung des Ladeluftkühlers abhängig und insbesondere gegenläufig zu einer Menge an zugegebenem Alkohol und Wasser zu steuern. Die Steuerung des Ladeluftkühlers kann beispielsweise über ein Regelventil erfolgen, das leistungsabhängig drosselt, oder über eine Drehzahlsteuerung einer Pumpe des Ladeluftkühlers. Es kann vorgesehen sein, den Ladeluftkühler nur dann mit maximaler Kühlleistung zu betreiben, wenn kein Waser-Alkohol-Gemisch dem Verbrennungsmotor zugeführt wird. Dies kann beispielsweise der Fall sein, wenn die zur Wasser-Alkohol-Zuführung erforderlichen Komponenten zu Wartungsarbeiten außer Betrieb sind. Eine Betriebstemperatur des Verbrennungsmotors darf auch nicht zu niedrig werden, da ansonsten eine Kondensierungsgefahr im Motor besteht. Wenn aus diesem Grund eine Kühlleistung reduziert werden soll, kann vorgesehen sein, den Ladeluftkühler herunterzufahren und nicht die Wasser-Alkohol-Zuführung.

Wegen hoher Sicherheitserfordernisse an Schiffen dürfen für Substanzen mit niedrigem Flammpunkt keine einwandigen Rohre verwendet werden. Doppelwandige Metallrohre stellen jedoch beträchtliche Mehrkosten dar, insbesondere bei gebogenen doppelwandigen Rohrbereichen. Erhebliche Kostenersparnisse können erreicht werden, wenn ein Wasser-Alkohol-Leitungsrohr, welches den Mischungsbehälter mit der Druckseite des Turboladers verbindet, doppelwandig ist mit einem äußeren Metallrohr und einem inneren Schlauch. Ebenso oder alternativ können ein Leitungsrohr ab dem Alkoholtank und ein oder mehrere Leitungsrohre für die Elektrolysegase in dieser Weise gebildet sein. Der Schlauch kann aus Kunststoff oder einem anderen nicht metallischen Material sein. Er ist flexibel und biegsam, so dass ein Einbringen in das äußere Metallrohr leicht möglich ist. Zwischen dem äußeren Metallrohr und dem inneren Schlauch kann ein Vakuum oder Unterdruck erzeugt sein, wobei ein Drucksensor bei einer Druckänderung auf eine Undichtigkeit des Schlauchs schließen kann. Demgegenüber kann es auch vorteilhaft sein, ein Schutzgas (beispielsweise Stickstoff) zwischen dem äußeren Metallrohr und dem inneren Schlauch einzusetzen, wobei dessen Druck insbesondere höher als atmosphärischer Druck ist. Eine Steuereinheit kann die Druckpumpe so steuern, dass ein Druck im Wasser-Alkohol-Leitungsrohr um einen vorgegebenen Mindestwert, beispielsweise mindestens 1 bar, höher ist als der Druck des Schutzgases. Im Vergleich zu einem Unterdruck bietet das Schutzgas einen Gegendruck auf den Schlauch, wodurch dessen Durchlässigkeit reduziert wird. Außerdem fördert ein höherer Druck des Schutzgases ein Kondensieren von eventuell durchtretendem Wasser-Alkohol-Gemisch, welches kondensiert in einem unteren Auffangbereich oder Siphon gesammelt und detektiert werden kann. Dies kann unter Umständen zuverlässiger als ein Drucksensor sein.

Je mehr Treibstoff (beispielsweise Schweröl) vom Verbrennungsmotor verbrannt wird, desto mehr Elektrolysegase sollten hinzugegeben werden. Die Dimensionierung der Elektrolyseeinrichtung ist in finanzieller Sicht bedeutsam, so dass eine ideale Größe der Elektrolyseeinrichtung für den oder die zu versorgenden Verbrennungsmotor(en) vorgesehen sein sollte. Prinzipiell kann die Elektrolyseeinrichtung so groß dimensioniert werden, dass bis zu einem Volllastbetrieb des Verbrennungsmotors immer mehr Elektrolysegase erzeugt und zugegeben werden können. Allerdings bieten Verbrennungsmotoren von Schiffen aus Sicherheitsgründen in der Regel deutlich größere Leistungsausgaben als unter normalen Umständen erforderlich. Nur sehr selten werden Antriebssysteme von Schiffen daher mit mehr als 85% einer maximalen Leistungsausgabe (Volllast) betrieben. Daher genügt es, die Elektrolyseeinrichtung so zu dimensionieren, dass ihre maximale Ausgabe an Elektrolysegasen, welche zu dem oder den Verbrennungsmotoren geführt wird, bereits bei 85% (oder allgemeiner bei einem Wert zwischen 70% und 90%) der maximalen Leistungsausgabe erreicht wird. Dadurch kann die Elektrolyseeinrichtung kleiner ausgelegt werden, ohne dass es im Normalbetrieb zu Effizienzeinbußen kommt. Bei dieser Ausführung kann die Steuereinheit dazu eingerichtet sein, über ihre Datenschnittstelle eine aktuelle Leistungsangabe bezüglich des Verbrennungsmotors zu erhalten und eine Menge an Wasserstoffgas und Sauerstoffgas, die dem Verbrennungsmotor zugeführt wird, umso größer einzustellen, je höher die aktuelle Leistungsangabe ist. Dabei ist die Elektrolyseeinrichtung so dimensioniert, dass die Steuereinheit eine maximal erzeugbare Menge an Wasserstoffgas und/oder Sauerstoffgas bereits ab einem Leistungsangabenschwellwert einstellt, welcher eine Teillast kennzeichnet, die zwischen 70% und 90% eines Volllastbetriebs des Verbrennungsmotors liegt.

Bei einem Hilfsdieselmotor kann die Leistungsangabe in der Regel direkt am Motor abgenommen werden. Bei einer Hauptmaschine erfasst ein Sensor, wieviel Leistung am Propellerschaft ins Wasser übertragen wird. Zusammen mit der Kenntnis einer von einem Wellengenerator der Hauptmaschine abgehenden Leistung kann dann der aktuelle Lastbetrieb des Verbrennungsmotors berechnet werden.

Um Wasserstoff- und Sauerstoffgas von der Elektrolyseeinrichtung in den Druckbereich hinterm Turbolader einzubringen, muss ein Druck des Wasserstoff- und Sauerstoffgases höher als ein Ladeluftdruck im Druckbereich sein. Eine Druckpumpe wäre hierzu jedoch sehr kostspielig, da wegen der Entzündlichkeit des Wasserstoffgases nur explosionssichere Pumpen eingesetzt werden dürfen. Vorzugsweise wird daher die Elektrolyseeinrichtung selbst zum Druckaufbau genutzt. Die Elektrolyseeinrichtung oder ihre Zellen sind daher als Druckkammer gebildet, also als ein geschlossener Behälter, in dem die erzeugten Elektrolysegase den Druck erhöhen. Mindestens ein Regelventil kann mit einem Auslass der Elektrolyseeinrichtung für Sauerstoff und/oder Wasserstoffgas verbunden sein, wobei das Regelventil eine Verbindung zur Druckseite des Turboladers nur öffnet, wenn ein Druck in der Elektrolyseeinrichtung einen einstellbaren Öffnungsdruck überschreitet. Die Steuereinheit kann den Öffnungsdruck abhängig von einem Ladeluftdruck hinter dem Turbolader einstellen, beispielsweise immer so, dass der Öffnungsdruck um einen Schwellwert (von z.B. 0,5bar) höher ist als der Ladeluftdruck.

Üblicherweise sind mehrere Verbrennungsmotoren vorhanden, welche eine Hauptmaschine und/oder eine oder mehrere Hilfsmaschinen des Schiffs sein können. Da beispielsweise regionsabhängig variiert werden kann, ob die Hauptmaschine oder die Hilfsmaschinen stärker betrieben werden, kann es vorteilhaft sein, wenn die Elektrolyseeinrichtung und die Wasser-Alkohol-Versorgung wahlweise die Hauptmaschine oder die Hilfsmaschinen bedienen. Bei einer solchen Ausführungsvariante sind die Elektrolyseeinrichtung und der Mischungsbehälter (beziehungsweise der Wassertank und der Alkoholtank) sowohl mit der Hauptmaschine als auch mit den Hilfsmaschinen verbunden. Eine oder die Steuereinheit kann variabel einstellen, ob der Hauptmaschine und/oder den Hilfsmaschinen das Wasserstoffgas, Sauerstoffgas, Wasser und Alkohol zugeführt werden, wobei ein Verhältnis zwischen zugeführtem Wasserstoffgas, Sauerstoffgas, Wasser und Alkohol abhängig davon variiert wird, ob die Hauptmaschine oder die Hilfsmaschinen versorgt werden. Insbesondere weil die Haupt- und Hilfsmaschinen in der Regel mit verschiedenen Treibstoffen betrieben werden, können bessere Verbrennungsergebnisse erzielt werden, wenn die Steuereinheit ein Verhältnis und eine Menge der zugeführten Stoffe abhängig davon verändert, welcher Verbrennungsmotor zu versorgen ist.

Bei verschiedenen Verbrennungsmotoren kann es sein, dass die zugehörigen Turbolader unterschiedliche Ladedrücke erzeugen. Für diesen Fall ist die Steuereinheit dazu eingerichtet, den Öffnungsdruck des Regelventils abhängig vom höchsten der Ladedrücke einzustellen, so dass der Öffnungsdruck auch gegenüber dem höchsten Ladedruck um einen vorgegebenen Mindestwert größer ist. Eine Elektrolysegas-Leitung kann sich stromabwärts vom Regelventil zu den Druckbereichen der mehreren Verbrennungsmotoren teilen und jeweils eine einstellbare Drosselung aufweisen, durch welche ein Druck der Elektrolysegase auf einen zum jeweiligen Ladedruck geeigneten Wert reduziert werden kann.

Als Ansaugtrakt wird vorliegend eine Leitung oder ein Leitungssystem verstanden, welches Luft zum Brennraum führt. Ein gemeinsamer Ansaugtrakt kann ein oder mehrere Brennräume oder Verbrennungsmotoren mit Luft versorgen. Die zugeführte Luft umfasst Frischluft, das heißt Umgebungsluft, und kann weitere Bestandteile umfassen. Der Turbolader umfasst einen Verdichter, welcher im Ansaugtrakt einen Luftdruck erhöht; der gesamte Bereich stromabwärts vom Turbolader bis zum Brennraum wird als Druckseite bezeichnet. Der Turbolader umfasst zudem eine Abgasturbine, welche von einem Abgasdruck des Verbrennungsmotors angetrieben wird und hierdurch den Verdichter antreibt. Da es auf die Wirkungsweise des Turboladers vorliegend nicht näher ankommt, kann im Ansaugtrakt auch ein Kompressor anstelle des Turboladers eingesetzt werden. Als Elektrolyseeinrichtung kann eine beliebig gestaltete Vorrichtung angesehen werden, welche mit Hilfe von elektrischer Energie einen Ausgangsstoff spaltet. Der Ausgangsstoff kann vorliegend Wasser sein, worunter eine wasserhaltige Lösung zu verstehen ist. Durch die Elektrolyse werden Wasserstoff- und Sauerstoffgas erzeugt. Diese Elektrolysegase werden auf der Druckseite des Turboladers eingebracht, das heißt im Ansaugtrakt oder auch direkt in den Brennraum. Umgestaltungen des Zylinders, der den Brennraum bildet, sind aufwändig und in der Regel kostspielig; allerdings bieten Dual Fuel Motoren einen Extraanschluss, der von manchen Betreibern nicht zur Brennstoffzufuhr genutzt wird. In diesem Fall kann der Extraanschluss am Zylinderdeckel eines Dual Fuel Motors umfunktioniert und mit der Elektrolyseeinrichtung verbunden werden. Damit bei beliebigen Motoren ohne größere Umbauten eine Zufuhr von Elektrolysegasen ermöglicht wird, kann es kostengünstiger sein, die Elektrolysegase in ein Luftleitungsrohr des Ansaugtrakts einzubringen. Als Alkoholtank wird ein Behälter mit einem prinzipiell beliebigen Alkohol, beispielsweise Methanol und/oder Ethanol, verstanden. Wird der Alkohol zunächst mit Wasser vermischt, sind für das Gemisch nur eine einzige Druckpumpe und eine einzige Düse zum Ansaugtrakt erforderlich. Liegen die Zylinder des Verbrennungsmotors weiter auseinander, was beispielsweise bei einer Hauptmaschine häufig der Fall ist, können auch mehrere Düsen/Einlassstellen für die Wasser-Alkohol-Mischung und auch mehrere Düsen für die Elektrolysegase in den Ansaugtrakt vorgesehen sein. Es können auch weitere Tanks mit dem Mischungsbehälter verbunden sein, um weitere Zusatzstoffe variabel hinzuzugeben. Zudem können in den Wasser- und den Alkoholtank auch weitere Zusatzstoffe ergänzt werden.

Zu Heizzwecken von beispielsweise Räumen oder Wasser nutzen Schiffe in der Regel Abwärme der Verbrennungsmotoren der Haupt- oder Hilfsmaschinen. Gerade im Hafenbetrieb laufen die Haupt- und Hilfsmaschinen aber in der Regel nur schwach, so dass ungenügend Abwärme entsteht. Aus diesem Grund kann ein Heizkessel vorgesehen sein, welcher einen Brennstoff zu Heizzwecken verbrennt. Der Brennstoff wird über eine Brennstoff-Leitung aus einem Brennstofftank eingebracht und kann beispielsweise Schweröl, Marine-Diesel, Gasöl oder Gas sein. Bei dieser Verbrennung entstehen üblicherweise große Rußmengen, was nicht nur aus Umweltsicht nachteilig ist, sondern auch zu Ablagerungen am Heizkessel führt, durch welche die erzeugbare Wärmeleistung sinkt. Heizkessel werden daher in der Regel größer ausgelegt als erforderlich und müssen regelmäßig gereinigt oder ausgetauscht werden. Den Verbrennungsvorgang des Heizkessels durch Zusatzstoffe zu verbessern, ist prinzipiell möglich; allerdings führen die hohen Sicherheitsregeln auf Schiffen dazu, dass beispielsweise eine eigene Elektrolyseeinrichtung für den Heizkessel, welche in geringen Mengen Wasserstoffgas zugibt, übermäßig aufwendig geschützt werden muss. Die Zusatzkosten verhindern eine solche Nutzung. Eine Variante der Erfindung nutzt die Erkenntnis, dass die Haupt-/Hilfsmaschinen und der Heizkessel in der Regel nicht ergänzend, sondern alternativ genutzt werden: Auf offener See läuft die Hauptmaschine meist stark und erzeugt genügend Abwärme, so dass der Heizkessel inaktiv bleiben kann. Hingegen ist die Hauptmaschine im Hafenbetrieb in der Regel abgeschaltet und der Heizkessel wird benötigt. Daher kann dieselbe Elektrolyseeinrichtung, die zuvor beschrieben wurde, auch über eine Heizkessel-Leitung mit dem Heizkessel verbunden werden. Die Elektrolyseeinrichtung muss nicht größer ausgelegt werden, um in der Regel auch den Heizkessel versorgen zu können. Hierbei muss nur ein einziger explosionsgeschützter Bereich um die Elektrolyseeinrichtung gebildet sein, und nicht etwa separate Schutzzonen für separate Elektrolyseeinrichtungen. Eine oder die Steuereinheit kann Wasserstoffgas und/oder Sauerstoffgas dem Heizkessel dann zuführen, wenn dieser Brennstoff verbrennt und eine maximal erzeugbare Menge an Wasserstoffgas und Sauerstoffgas nicht bereits dem mindestens einen Verbrennungsmotor zugewiesen ist. Die Heizkessel-Leitung kann eine Sauerstoff-Leitung und eine davon getrennte Wasserstoff-Leitung umfassen. Hierdurch kann die Steuereinheit ein Verhältnis zwischen Sauerstoffgas und Wasserstoffgas, welche dem Heizkessel zugeführt werden, abhängig von einem aktuell im Heizkessel verbrannten Brennstoff einstellen.

Die als zusätzliche Merkmale des Schiffsantriebssystems beschriebenen Eigenschaften der Erfindung ergeben bei bestimmungsgemäßer Verwendung auch Varianten des erfindungsgemäßen Verfahrens. Varianten des erfindungsgemäßen Umrüstungsverfahren ergeben sich durch Ergänzen der als fakultativ beschriebenen Merkmale des erfindungsgemäßen Schiffsantriebssystems.

Weitere Vorteile und Merkmale der Erfindung werden nachstehend mit Bezug auf die beigefügte schematische Figur beschrieben:

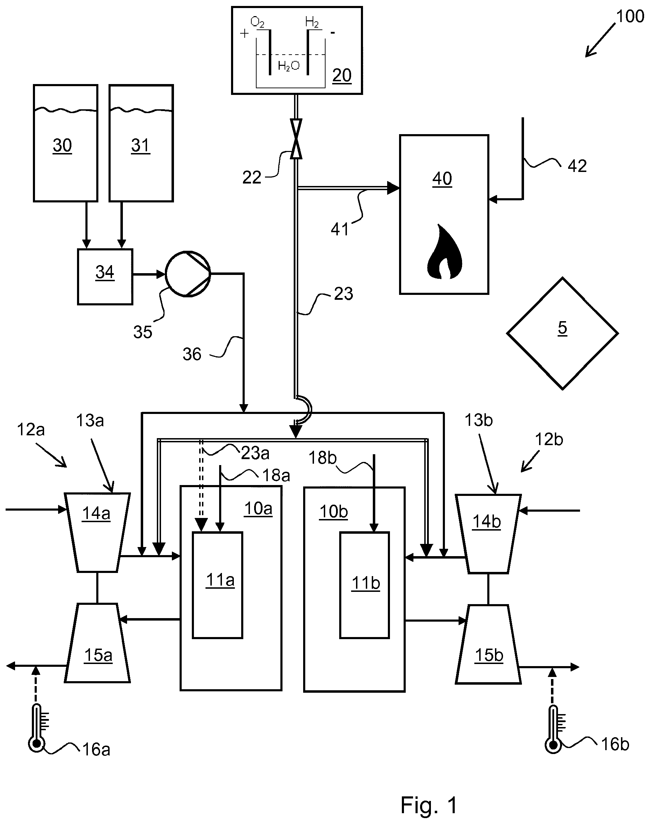

- Fig. 1: ist eine schematische Darstellung eines Ausführungsbeispiels eines erfindungsgemäßen Schiffantriebssystems.

Fig. 1 zeigt ein Ausführungsbeispiel eines erfindungsgemäßen Schiffantriebssystems 100. Das Schiffantriebssystem 100 umfasst einen oder mehrere Verbrennungsmotoren 10a, 10b, denen über jeweilige Treibstoffleitungen 18a, 18b ein (fossiler) Treibstoff zugeführt wird. Die Verbrennungsmotoren 10a, 10b können beispielsweise Einheiten einer Hauptmaschine, eine Hauptmaschine und eine/mehrere Hilfsmaschinen, oder Einheiten einer oder mehrerer Hilfsmaschinen des Schiffantriebssystems 100 sein.

Jeder Verbrennungsmotor 10a, 10b umfasst mindestens einen Brennraum 11a, 11 b sowie einen Ansaugtrakt, 12a, 12b, über den Frischluft in den Brennraum 11a, 11 b geleitet wird. Zudem ist jeweils ein Turbolader 13a, 13b vorgesehen, welcher eine Abgasturbine 15a, 15b und einen Verdichter 14a, 14b umfasst. Die Abgasturbinen 15a, 15b werden vom Druck des Abgases angetrieben, welcher durch Verbrennung des Treibstoffs in den Brennräumen 11 a, 11 b entsteht. Die Abgasturbinen 15a, 15b treiben die jeweiligen Verdichter 14a, 14b an, sodass die Frischluft im Ansaugtrakt 12a, 12b komprimiert wird. Dabei wird sie als Ladeluft bezeichnet.

Der Verbrennungsprozess des Treibstoffs sollte möglichst effizient erfolgen und wenig Schadstoffe erzeugen. Zu diesem Zweck werden elektrolytisch erzeugtes Wasserstoff- und Sauerstoffgas sowie Wasser und Alkohol (beispielsweise Methanol) zugeführt, was nachfolgend näher beschrieben wird. Durch die erfindungsgemäße Gestaltung werden außerdem kosteneffizient hohe Sicherheitsanforderungen berücksichtigt.

Wasser und Alkohol werden aus einem Wassertank 31 und einem Alkoholtank 30 entnommen und in einem Mischungsbehälter 34 gemischt. Anschließend befördert eine Druckpumpe 35 das Gemisch über ein Wasser-Alkohol-Leitungsrohr 36 in den Ansaugtrakt 12a, 12b, nämlich in einen Druckbereich stromabwärts vom Verdichter 14a, 14b. Die Einleitung hinter dem Verdichter 14a, 14b hat im Vergleich zu einer Einleitung vor dem Verdichter 14a, 14b den Vorteil, dass Ladeluft besser gekühlt wird und dadurch der Verdichter 14a, 14b größere Luftmengen befördern kann. Geringere Verbrennungstemperaturen sind zudem förderlich zur Reduzierung von Stickoxiden, die durch die Verbrennung entstehen.

Indem getrennte Tanks 30, 31 für Wasser und Alkohol vorgesehen sind, kann das Mischungsverhältnis variabel verändert werden. Zudem wird durch den Mischungsbehälter 34 das Problem umgangen, dass Emulsionen aus Wasser und Alkohol eine beschränke Langzeitstabilität haben. Als weiterer Vorteil ist aufgrund des Mischungsbehälters 34 nur eine einzige Druckpumpe 35 erforderlich. Da der Alkoholtank 31 sowie Leitungen und eventuelle Pumpen, die den Alkohol transportieren, wegen der leichten Entzündbarkeit des Alkohols hohen Sicherheitsanforderungen unterliegen, stellt es eine relevante Kostenersparnis ein, wenn eine einzige Druckpumpe 35 genügt.

Die Elektrolyseeinrichtung 20 kann eine prinzipiell beliebige Anzahl an Elektrolysezellen umfassen, welche unter Nutzung elektrischer Energie Wasser oder eine wässrige Lösung zu insbesondere Wasserstoffgas und Sauerstoffgas spalten. Die erzeugten Elektrolysegase (Wasserstoffgas und Sauerstoffgas) werden über eine Elektrolysegas-Leitung 23 dem Ansaugtrakt 12a, 12b zugeführt, ebenfalls im Druckbereich hinter dem Verdichter 14a, 14b.

Indem die Elektrolysegase sowie das Wasser-Alkohol-Gemisch stromabwärts vom Verdichter 14a, 14b zugegeben werden, wird eine höhere Sicherheit erreicht. So könnte es bei Fehlern oder Beschädigungen zu Flammenrückschlägen aus dem Brennraum 11a, 11 b in den Ansaugtrakt 12a, 12b kommen. Wegen der leichten Entzündlichkeit von Alkohol und Wasserstoffgas könnten sich Flammen weiter ausbreiten. Der Ansaugtrakt 12a, 12b ist zum Ansaugen von Frischluft geöffnet, beispielsweise zu einem Maschinenraum, in dem sich Menschen aufhalten können. Das Risiko, dass sich Flammen über den brennbaren Wasserstoff und Alkohol bis in den Maschinenraum ausbreiten, wird dadurch stark reduziert, dass eine Einleitung dieser Substanzen erst kurz vor der Brennkammer erfolgt und eine Trennung zum Maschinenraum auch durch den Verdichter 14a, 14b vorliegt. Flammenrückschlagventile können als weiterer Schutz ergänzt sein.

Aus Sicherheitsgründen sind zudem doppelwandige Rohre für das Alkohol-Wasser-Rohr 36 und für die Elektrolysegas-Leitung 23 erforderlich. Doppelwandige Rohre mit zwei Metallwänden sind mit hohen Kosten verbunden. Da aber insbesondere durch die Wasserbeigabe zum Alkohol die Brennbarkeit reduziert ist, kann es genügen, wenn eine Außenwand durch ein Metall gebildet ist und eine Innenwand als Schlauch durch hauptsächlich nicht-metallische Materialien gebildet ist.

Um die signifikanten Kosten einer Druckpumpe zum Befördern der Elektrolysegas zu vermeiden, kann die Elektrolyseeinrichtung 20 als Druckkammer gestaltet sein. Es ist ein Regelventil 22 vorhanden, welches einen Auslass für Elektrolysegase nur dann freigibt, wenn in der Elektrolyseeinrichtung 20 durch die erzeugten Gase ein Öffnungsdruck erreicht ist.

Die Elektrolysegase Sauerstoff und Wasserstoff können gemeinsam als Knallgas in einer einzigen Leitung befördert werden. Alternativ kann die Elektrolyseeinrichtung 20 auch so gestaltet sein, dass Sauerstoffgas und Wasserstoffgas getrennt über separate Leitungen entnehmbar sind. Hierbei kann pro Leitung ein Regelventil vorhanden sein. Eine getrennte Zugabe von Sauerstoffgas und Wasserstoffgas erlaubt ein variabel einstellbares Verhältnis zwischen diesen.

Durch die Zugabe von Sauerstoffgas, Wasserstoffgas, Alkohol und Wasser kann die Effizienz der Verbrennung gesteigert werden. Hierbei sind die Verhältnisse zwischen diesen Zusatzstoffen sowie ihre Gesamtmengen relevant. Ideale Werte dieser Größen hängen von verschiedenen Parametern ab. Deshalb ist eine Steuereinheit 5 vorhanden, welche die Verhältnisse und Mengen der genannten Zusatzstoffe variabel einstellt. Hierzu steuert die Steuereinheit die Elektrolyseeinrichtung 20, insbesondere eine Wasserzufuhr und/oder eine elektrische Leistungsaufnahme der Elektrolyseeinrichtung 20, sowie die Druckpumpe 35 und das mindestens eine Regelventil 22. Die Steuereinheit 5 empfängt ein Treibstoffsignal, welches angibt, was für ein Treibstoff momentan in den Brennräumen 11 a, 11 b verbrannt wird. Bei einem Wechsel des Treibstoffs ändert die Steuereinheit 5 auch das Verhältnis der vorgenannten Zusatzstoffe. Zudem werden eine Abgastemperatur über Abgastemperatursensoren 16a, 16b erfasst. Je höher die Abgastemperatur ist, desto mehr Wasser und/oder Alkohol können zu Kühlzwecken in den Ansaugtrakt eingesprüht werden. Zudem kann die Steuereinheit 5 variabel einstellen, wie viele und welche der Verbrennungsmotoren 10a, 10b mit den Zusatzstoffen versorgt werden. Da sich die Verbrennungsmotoren 10a, 10b in ihrem Aufbau unterscheiden können, kann es auch sinnvoll sein, das Verhältnis der Zusatzstoffe zu ändern, wenn andere der mehreren Verbrennungsmotoren betrieben werden.

Bei einer optionalen Ergänzung wird auch der Verbrennungsprozess eines Heizkessels 40 verbessert. Der Heizkessel 40 wird über eine Zufuhrleitung 42 mit Brennstoff versorgt, beispielsweise mit Schweröl, Marine-Diesel- oder Gas-Öl. Durch die Zugabe von Wasserstoffgas und Sauerstoffgas kann eine vollständigere Verbrennung erreicht werden, bei welcher weniger Ruß entsteht. Eine eigene Elektrolyseeinrichtung für einen Heizkessel 40 ist aufgrund der beschränkten Nutzung des Heizkessels und wegen der durch Sicherheitserfordernisse hohen Kosten einer Elektrolyseeinrichtung kaum rentabel. Allerdings kann die Elektrolyseeinrichtung 20, die für die Verbrennungsmotoren 10a, 10b vorgesehen ist, mitbenutzt werden für den Heizkessel 40. Die Steuereinheit 5 kann einstellen, in welchem Verhältnis erzeugte Elektrolysegase zu den Verbrennungsmotoren 10a, 10b und zum Heizkessel 40 aufgeteilt werden. Dies ist auch deshalb besonders attraktiv, weil der Heizkessel 40 oftmals umso stärker betrieben wird, je schwächer die Verbrennungsmotoren 10a, 10b laufen. Dies ist dadurch begründet, dass der Heizkessel 40 gerade dann benötigt wird, wenn die Verbrennungsmotoren 10a, 10b nicht genügend Abwärme bereitstellen. Daher kann der Heizkessel 40 durch Elektrolysegase mitversorgt werden, ohne dass die Elektrolyseeinrichtung 20 hierdurch größer oder wesentlich teurer gestaltet werden müsste.

Eine Ausführungsvariante ist durch eine gestrichelt dargestellte Leitung 23a gezeigt. Durch die Leitung 23a können Elektrolysegase direkt in den Brennraum 11a geleitet werden, anstelle einer Einleitung im Ansaugtrakt. Dies kann insbesondere sinnvoll sein, wenn an einem Zylinderdeckel des Verbrennungsmotors 10a, 10b ein ansonsten ungenutzter Anschluss vorhanden ist, was bei Dual Fuel Motoren der Fall sein kann, bei denen aber bloß einer der beiden Anschlüsse für eine Treibstoffzufuhr genutzt wird. Ansonsten bietet eine Einleitung im Ansaugtrakt den Vorteil, dass keine Umbauten an herkömmlichen Brennräumen 11a, 11 b nötig sind. Dadurch wird ein kostengünstiges Aufrüsten vorhandener gattungsgemäßer Schiffantriebssysteme ermöglicht.

## Patentansprüche

1. Umrüstungsverfahren für ein Schiffsantriebssystem,
wobei das Schiffantriebssystem mindestens einen Verbrennungsmotor (10a, 10b) umfasst mit
- einem Brennraum (11 a, 11 b) zum Verbrennen eines Treibstoffs,
- einem Ansaugtrakt (12a, 12b) zum Zuleiten von Frischluft zum Brennraum (11a, 11 b), und
- einem Turbolader (13a, 13b) mit einem Verdichter (14a, 14b) im Ansaugtrakt (12a, 12b),
**gekennzeichnet durch** die folgenden Schritte:
- Verbinden einer Elektrolyseeinrichtung (20), welche zum Erzeugen von Wasserstoff- und Sauerstoffgas eingerichtet ist, mit einer Druckseite des Verdichters (14a, 14b) und
- Verbinden eines Wassertanks (31) und eines Alkoholtanks (30) mit einer Druckseite des Verdichters (14a, 14b).

2. Schiffsantriebssystem umfassend mindestens einen Verbrennungsmotor (10a, 10b) mit
- einem Brennraum (11 a, 11 b) zum Verbrennen eines Treibstoffs,
- einem Ansaugtrakt (12a, 12b) zum Zuleiten von Frischluft zum Brennraum (11a, 11 b), und
- einem Turbolader (13a, 13b) mit einem Verdichter (14a, 14b) im Ansaugtrakt (12a, 12b),
eine Elektrolyseeinrichtung (20) zum Erzeugen von Wasserstoff- und Sauerstoffgas für den Verbrennungsmotor (10a, 10b), und
einen Alkoholtank (30) zum Zuführen von Alkoholen zum Verbrennungsmotor (10a, 10b),
**dadurch gekennzeichnet,**
- **dass** ein Wassertank (31) vorhanden ist,
- **dass** der Wassertank (31) und der Alkoholtank (30) mit einer Druckseite des Verdichters (14a, 14b) verbunden sind, und
- **dass** die Elektrolyseeinrichtung (20) mit der Druckseite des Verdichters (14a, 14b) verbunden ist.

3. Schiffsantriebssystem nach Anspruch 2,
**dadurch gekennzeichnet,**
**dass** der Wassertank (31) und der Alkoholtank (30) über einen Mischungsbehälter (34) mit der Druckseite des Turboladers (13a, 13b) verbunden sind, und
**dass** eine Druckpumpe (35) zwischen dem Mischungsbehälter (34) und der Druckseite des Turboladers (13a, 13b) vorhanden und dazu eingerichtet ist, einen Druck zu erzeugen, der höher ist als ein Druck des Verdichters (14a, 14b).

4. Schiffsantriebssystem nach Anspruch 3,
**dadurch gekennzeichnet,**
**dass** eine Steuereinheit (5) vorgesehen und dazu eingerichtet ist,
- ein Wasser-Alkohol-Mischungsverhältnis im Mischungsbehälter (34) variabel einzustellen,
- ein Verhältnis zwischen Elektrolysegasen und Wasser und Alkohol, welche dem Verbrennungsmotor (10a, 10b) zugeführt werden, variabel einzustellen,
**dass** die Steuereinheit (5) eine Datenschnittstelle zum Empfangen eines Treibstoffsignals umfasst, welches angibt, was für ein Treibstoff dem Verbrennungsmotor (10a, 10b) zugeführt wird, und
**dass** die Steuereinheit (5) dazu eingerichtet ist, das Verhältnis zwischen Elektrolysegasen und Wasser und Alkohol abhängig vom Treibstoffsignal zu variieren.

5. Schiffsantriebssystem nach Anspruch 4,
**dadurch gekennzeichnet,**
**dass** ein Abgastemperatursensor (16a, 16b) vorhanden ist und
**dass** die Steuereinheit (5) dazu eingerichtet ist,
- das Verhältnis zwischen Elektrolysegasen und Wasser und Alkohol abhängig von einer Abgastemperatur zu variieren, insbesondere bei höherer Abgastemperatur mehr Alkohol und Wasser zuzugeben.

6. Schiffsantriebssystem nach einem der Ansprüche 3 bis 5,
**dadurch gekennzeichnet,**
**dass** die Elektrolyseeinrichtung (20) so gestaltet ist, dass Wasserstoffgas und Sauerstoffgas über getrennte Elektrolysegas-Leitungen (23) befördert werden, und
**dass** die Steuereinheit (5) dazu eingerichtet ist, auch ein Verhältnis zwischen Wasserstoffgas und Sauerstoffgas, welche dem Verbrennungsmotor (10a, 10b) zugeführt werden, variabel einzustellen.

7. Schiffsantriebssystem nach Anspruch 4 oder 5,
**dadurch gekennzeichnet,**
**dass** ein Ladeluftkühler vorgesehen ist und
**dass** die Steuereinheit (5) dazu eingerichtet ist, eine Kühlleistung des Ladeluftkühlers gegenläufig zu einer Menge an Alkohol und Wasser zu steuern, welche auf der Druckseite des Turboladers (13a, 13b) zugegeben werden.

8. Schiffsantriebssystem nach einem der Ansprüche 3 bis 7,
**dadurch gekennzeichnet,**
**dass** ein Wasser-Alkohol-Leitungsrohr (36), welches den Mischungsbehälter (34) mit der Druckseite des Turboladers (13a, 13b) verbindet, doppelwandig ist mit einem äußeren Metallrohr und einem inneren Schlauch,
**dass** sich ein Schutzgas zwischen dem äußeren Metallrohr und dem inneren Schlauch befindet, dessen Druck höher als atmosphärischer Druck ist, und wobei eine Steuereinheit (5) die Druckpumpe (35) so steuert, dass ein Druck im Wasser-Alkohol-Leitungsrohr (36) mindestens 1 bar höher ist als der Druck des Schutzgases.

9. Schiffsantriebssystem nach einem der Ansprüche 3 bis 8,
**dadurch gekennzeichnet,**
**dass** die Steuereinheit (5) dazu eingerichtet ist,
- über ihre Datenschnittstelle eine aktuelle Leistungsangabe zum Verbrennungsmotor (10a, 10b) zu erhalten,
- eine Menge an Wasserstoffgas und Sauerstoffgas, die dem Verbrennungsmotor (10a, 10b) zugeführt wird, umso größer einzustellen, je höher die aktuelle Leistungsangabe ist,
wobei die Elektrolyseeinrichtung (20) so dimensioniert ist, dass die Steuereinheit (5) eine maximal erzeugbare Menge an Wasserstoffgas und/oder Sauerstoffgas bereits ab einem Leistungsangabenschwellwert einstellt, welcher eine Teillast kennzeichnet, die zwischen 70% und 90% eines Volllastbetriebs des Verbrennungsmotors (10a, 10b) liegt.

10. Schiffsantriebssystem nach einem der Ansprüche 3 bis 9,
**dadurch gekennzeichnet,**
**dass** ein Regelventil (22) mit einem Auslass der Elektrolyseeinrichtung (20) für Sauerstoff und/oder Wasserstoffgas verbunden ist, wobei das Regelventil (22) eine Verbindung zur Druckseite des Turboladers (13a, 13b) öffnet, wenn ein Druck in der Elektrolyseeinrichtung (20) einen einstellbaren Öffnungsdruck überschreitet, und
**dass** die Steuereinheit (5) dazu eingerichtet ist, den Öffnungsdruck abhängig von einem Ladeluftdruck hinter dem Turbolader (13a, 13b) einzustellen.

11. Schiffsantriebssystem nach einem der Ansprüche 3 bis 10,
**dadurch gekennzeichnet,**
**dass** mehrere Verbrennungsmotoren (10a, 10b) vorhanden sind, welche eine Hauptmaschine und Hilfsmaschinen des Schiffs sind,
**dass** die Elektrolyseeinrichtung (20) und der Mischungsbehälter (34) sowohl mit der Hauptmaschine als auch mit den Hilfsmaschinen verbunden sind, und dass eine oder die Steuereinheit (5) dazu eingerichtet ist,
- variabel einzustellen, ob der Hauptmaschine und/oder den Hilfsmaschinen das Wasserstoffgas, Sauerstoffgas, Wasser und Alkohol zugeführt werden, und
- ein Verhältnis zwischen zugeführtem Wasserstoffgas, Sauerstoffgas, Wasser und Alkohol abhängig davon zu variieren, ob die Hauptmaschine oder die Hilfsmaschinen versorgt werden.

12. Schiffsantriebssystem nach Anspruch 11,
**dadurch gekennzeichnet,**
**dass** die Turbolader (13a, 13b) der mehreren Verbrennungsmotoren (10a, 10b) unterschiedliche Ladedrücke bereitstellen,
**dass** die Steuereinheit (5) dazu eingerichtet ist, den Öffnungsdruck des Regelventils (22) abhängig vom höchsten der Ladedrücke einzustellen, dass sich eine Elektrolysegas-Leitung (23) stromabwärts vom Regelventil (22) zu den Druckbereichen der mehreren Verbrennungsmotoren (10a, 10b) teilt und jeweils eine einstellbare Drosselung vorgesehen ist.

13. Schiffsantriebssystem nach einem der Ansprüche 3 bis 12,
**dadurch gekennzeichnet,**
**dass** mindestens ein Heizkessel (40) zum Verbrennen eines Brennstoffs vorhanden ist,
**dass** eine Heizkessel-Leitung (41) die Elektrolyseeinrichtung (20) mit dem Heizkessel (40) verbindet,
**dass** die Steuereinheit (5) dazu eingerichtet ist, Wasserstoffgas und Sauerstoffgas dem Heizkessel (40) zuzuführen, wenn dieser Brennstoff verbrennt und eine maximal erzeugbare Menge an Wasserstoffgas und Sauerstoffgas nicht bereits dem mindestens einen Verbrennungsmotor (10a, 10b) zugewiesen ist.

14. Schiffsantriebssystem nach Anspruch 13,
**dadurch gekennzeichnet,**
**dass** die Heizkessel-Leitung (41) eine Sauerstoff-Leitung und eine davon getrennte Wasserstoff-Leitung umfasst, und
**dass** die Steuereinheit (5) dazu eingerichtet ist, ein Verhältnis zwischen Sauerstoffgas und Wasserstoffgas, welche dem Heizkessel (40) zugeführt werden, abhängig von einem aktuell im Heizkessel (40) verbrannten Brennstoff einzustellen.

15. Verfahren zum Betreiben eines Schiffsantriebssystems,
umfassend die folgenden Schritte:
- Verbrennen eines Treibstoffs in einem Brennraum (11a, 11 b) eines Verbrennungsmotors (10a, 10b),
- Zuleiten von Frischluft über einen Ansaugtrakt (12a, 12b) zum Brennraum (11a, 11 b),
- Verdichten der Frischluft mittels eines Verdichters (14a, 14b) eines Turboladers (13a, 13b) im Ansaugtrakt (12a, 12b),
- Erzeugen von Wasserstoff- und Sauerstoffgas für den Verbrennungsmotor (10a, 10b) mittels einer Elektrolyseeinrichtung (20), und
- Zuführen von Alkoholen aus einem Alkoholtank (30) zum Verbrennungsmotor (10a, 10b),
**gekennzeichnet durch**
- Zuführen der Alkohole und von Wasser aus einem Wassertank (31) an einer Druckseite des Verdichters (14a, 14b) und
- Zuführen von Wasserstoff- und Sauerstoffgas der Elektrolyseeinrichtung (20) an der Druckseite des Verdichters (14a, 14b).
